# EUROPEAN PATENT APPLICATION

(11) **EP 4 336 301 A1**
(43) Date of publication of application: **13.03.2024**
(21) Application number: 22195034.8
(22) Date of filing: 12.09.2022
(51) Int. Cl.: G05D 7/06

(54) **A VALVE ARRANGEMENT FOR CONTROLLING FLUID FLOW**

(71) Applicant: IMI Hydronic Engineering International SA, 1262 Eysins (CH)
(72) Inventor: JILDEROS, Daniel, 507 34 Brämhult (SE); KROGH, Martin, 524 42 Ljung (SE); ENGELBREKTSSON, Anders, 518 90 Sandared (SE)
(74) Representative: Zacco Sweden AB

(57) **Abstract**

A valve arrangement for controlling fluid flow. It comprises a valve plug located within the valve body, an actuator operatively connected or connectable to the valve plug for moving the valve plug to adjust the flow rate through the valve body, a differential pressure regulator configured to limit variations of the differential pressure across the valve plug when fluid is flowing through the valve body, a flow meter configured to measure the flow rate through the valve body, and a control unit. The control unit is configured to receive a request input signal representative of a desired flow rate through the valve body, and a flow input signal from the flow meter representative of the measured flow rate. The control unit is configured to, based on the received signals, send a control signal to the actuator to move the valve plug or to maintain the valve plug in its position.

## Description

### TECHNICAL FIELD

The present application relates to a valve arrangement for controlling fluid flow.

### BACKGROUND ART

Fluid distribution systems, for example for heating, cooling and water supply, are designed to feed a fluid from a source to a consumption point. Each consumption point typically has a calculated and designed flow or differential pressure requirement. However, depending on the type of hydronic system, the flow requirement is often variable over time and can change with factors like seasonality (e.g. summer or winter), that changes the load from the consumption points, temperature changes of the system fluid, changes in consumption of the system fluid (e.g. for drinking water).

Control valves are frequently used in fluid distribution systems and have a variable opening such that the flow rates can be controlled. Hereby, the flow fed to the consumption point may be varied in an effective manner. However, distortions in the controlled flow rate, due to variations in differential pressure across the control valve, may occur. To reduce the risk of such distortions, control valves have been combined with differential pressure regulators to keep the differential pressure variations within acceptable levels. Such a combined product is often referred to as "pressure independent control valve". The idea of such a combined product is that a certain setting on the control valve (or on an actuator controlling the control valve) is expected to result in a corresponding flow rate, irrespective of the pressure variations in the system, as such pressure variations should be handled by the differential pressure regulator to maintain a substantially constant differential pressure across the control valve. Although these combined products are referred to as "pressure independent" there will still be some variations in differential pressure, e.g. up to ±20% (due to the so called P-band of the differential pressure regulator).

The above mentioned pressure independent control valves require a minimum differential pressure (so called "starting pressure") to work properly. This starting pressure increases the size of the pump head of the fluid distribution system, and thereby also increases the operating costs. Conversely, if the system cannot provide the desired starting pressure, pressure variations at low starting pressures will cause inaccurate flow control.

### SUMMARY OF THE INVENTION

An object of the present inventive concept is to at least partly alleviate the above-mentioned drawbacks of the prior art. This and other objects, which will become apparent in the following disclosure, are accomplished by a valve arrangement presented in the independent claim. Some non-limiting exemplary embodiments are presented in the dependent claims.

The present inventive concept is based on the realization that by measuring a flow rate of a valve arrangement having a differential pressure regulator, and controlling the opening degree of the control valve based on such flow measurements, an accurate flow control can be achieved even at very low differential pressures across the control valve. Furthermore, the error margin at high differential pressures can also be reduced. The general inventive concept and some exemplary embodiments will now be further discussed below.

According to an aspect of this disclosure, there is provided a valve arrangement for controlling fluid flow. The valve arrangement comprises:
- a valve body having an inlet for receiving a fluid into the valve body, and outlet for discharging fluid from the valve body,
- a valve plug located within the valve body and movable between a closed position in which fluid is prevented, or only a leak flow is allowed, to flow from said inlet to said outlet, and a fully opened position,
- an actuator operatively connected or connectable to the valve plug for moving the valve plug to adjust the flow rate through the valve body,
- a differential pressure regulator configured to limit variations of the differential pressure across the valve plug when fluid is flowing through the valve body, the differential pressure regulator being in fluid communication with the fluid flow both upstream and downstream of the valve plug,
- a flow meter configured to measure the flow rate through the valve body,
- a control unit configured to receive:
   i) a request input signal representative of a desired flow rate through the valve body, and
   ii) ii) a flow input signal from the flow meter representative of the measured flow rate,
   wherein the control unit is configured to, based on the received request input signal and the received flow input signal, send a control signal to the actuator to move the valve plug or to maintain the valve plug in its position.

By using a flow meter, despite the presence of a differential pressure regulator, and controlling the actuator based on the received input signal from the flow meter, accurate flow control through the valve body is obtainable even below the starting pressure by controlling directly on the input flow signal. This is possible as long as the differential pressure is enough to give the flow required by opening up the valve plug more compared to where the valve plug would normally be positioned when the starting pressure is obtained.

When the valve plug is not subjected to a moving force from the actuator, then the valve plug may suitably be biased to stay either in said closed position or in said fully opened position (i.e. the two end positions of the valve plug). Therefore, a spring member may be provided in the valve body which provides either a pushing or pulling force to the valve plug so that the valve plug stays in one of its end positions. In case the valve plug is in an open position between said end positions, and it is desired to maintain the valve plug in that position, then depending on the type of actuator, a control signal may need to be applied to the actuator to maintain the valve in its position to counteract the force of the spring member.

Because of the differential pressure regulator limiting variations of differential pressure across the valve plug, any actuator that is selected will not be required to perform a large strokes to compensate for pressure variations. Thus, the selected actuator may have a relatively short stroke length and may thus suitably be relatively compact. Although using a small motorized actuator is conceivable, because it often has a gearing arrangement for moving it stepwise, controlling its movement may not be considered accurate enough. However, a small thermoelectric actuator can advantageously be used as it is stepless, and a higher accuracy may be obtained.

Therefore, according to at least one exemplary embodiment, the actuator is a thermoelectric actuator. A thermoelectric actuator is also beneficial because of its relatively low cost and because of its quiet operation. The thermoelectric actuator has a temperature-sensing material which expands or contracts based on the temperature it is subjected to. By operatively connecting a valve rod carrying the valve plug to the temperature-sensing material, the valve plug can follow the dimensional change of the temperature-sensing material. A thermoelectric actuator may suitably be controlled by a PWM (pulse-width modulation) signal. The PWM signal can be used to move the thermoelectric actuator in a certain direction or maintain it in a fixed position. A technical benefit of using a thermoelectric actuator with a PWM control in the valve arrangement may include that the speed of the actuator can easily be controlled by changing the "power on" time of the actuator. If it is desired to quickly move the valve plug from one open position to another open position, the power on time can be significantly increased compared to the power on time for keeping the valve plug in a steady state position. If only short movement of the valve plug is desired, the power on time may be just slightly changed.

It should be understood that although a PWM signal may suitably be used for controlling the movement or of the actuator or for maintaining its position (and thus the movement of the valve plug or the maintaining of the valve plug position), other types of control signals, such as digital or analogue control signals, may be used.

According to at least one exemplary embodiment, the control unit comprises or has access to an electronic memory, wherein the control unit is configured to determine, based on data stored in the electronic memory, a relation between a control signal change and its impact on the flow rate through the valve body, wherein the control unit is configured to control the actuator based on said relation. If the actuator of the valve arrangement is a linear actuator, the controlling of the actuator is relatively simple because of the inclusion of the differential pressure regulator. For a linear actuator (having a linear characteristic), you will obtain a certain change in flow rate (e.g. litres/h) for a certain change in actuator position (e.g. millimetres). This will be irrespective of the present flow rate. Thus, if the control unit receives a request for a certain change in flow rate (such a request may for instance come from a building management system, BMS) that will correspond to a certain positional movement. However, for other types of actuators, such as thermoelectric actuators or 3-point actuators there may not be such a simple linear relationship. For a 3-point actuator, the control unit will not know the position of the actuator, as the actuator just moves in one direction or the other depending on if it is supplied with a positive or negative voltage, respectively. In such cases where a simple linear characteristic is not available, data stored in an electronic memory, may be used to determine a relationship between a control signal change and its impact on the flow rate. For instance, an example may be presented with respect to a thermoelectric actuator, in which a temperature-sensing material expands or contracts based on the temperature it is subjected to. Suppose the control unit is set to control the thermoelectric actuator so that a steady state at 250 litres/h is provided through the valve body, and suppose that for doing this the control unit controls the thermoelectric actuator to be powered at 0.5W to keep the steady state (i.e. at this power the temperature is such that temperature-sensing element neither contracts nor expands). If the control unit then receives a request for a change (for example to 350 litres/h), it may determine based on the stored data in the electronic memory, that the fastest way to achieve such a change is to temporarily increase the power substantially (e.g. to 1W during 5 seconds) and then temporarily decrease the power somewhat (e.g. to 0.7W during 3 seconds) and then back to 0.5 W again. For another change, say to 470 litres/h, the control unit may instead determine to increase to 1 W during 10 seconds, then 0.7 W for 3 seconds, and then back to 0.5 W again to keep the new steady state. Thus, from the above examples it can be understood that it may be more time efficient to make the temperature-sensing material expand or contract at a relatively fast pace and then slow down as the target is reached, instead of providing a power which slowly expands or contracts the temperature-sensing material to arrive at the target. The above numbers are, of course, just examples of ease of understanding, and should by no means be considered to be limiting to this disclosure. The point is that the control unit may have access to a "map", i.e. data (e.g. power, time, positional change, etc.) which it can use to calculate how a certain control signal change impacts the flow rate, and how such control signal may be varied to quickly arrive at a desired change in flow rate.

From the above, it should be understood that the relation between the control signal change and the flow rate may be a known and fixed relation. Such a fixed relation can be available from a look-up table. For a linear characteristics, the fixed relation may be available from a look-up table or available by calculation from a predefined equation. In the example of thermoelectric actuators look-up tables may include matrices in which for example power and time are mapped to their effect on position of the thermoelectric actuator.

According to at least one exemplary embodiment, the control unit is configured to operate in a self-learning model by:
- subsequently to sending the control signal to the actuator, continuing to receive said flow input signal from the flow meter,
- determining the accuracy of said determined relation between the control signal change and the impact on the flow rate, and
- updating, based on said determined accuracy, said data in the electronic memory.
Hereby, the correlation between future control signals and the impact on the flow rate will be improved. This may be particularly advantageous for adapting the controlling to different types of actuators, valves, provided by different manufacturers. The control unit will learn from the flow meter how quickly the desired flow rate is obtained, and may therefore adapt the controlling of the particular connected actuator for future positional changes. For instance, the actuator may initially be moved quickly to a position that approximately results in the desired flow rate, but due to the flow input signal, the control unit will want to compensate for any small error. If such compensation results in a self-oscillation as the control unit tries to compensate back and forth, the self-learning model may be updated by a suitable algorithm and learn to identify and reduce such self-oscillation in order to get to, or get very close to, the desired flow rate. The self-learning model may, for instance, be a machine-learning model based on e.g. reinforcement learning, wherein the model is accordingly rewarded or penalized based on the quality/accuracy of the result and its relation to the request input signal representative of a desired flow rate.

According to at least one exemplary embodiment, the actuator is a proportional actuator, wherein the control signal from the control unit sets a position of the actuator, which in turn corresponds to a position of the valve plug, which in turn corresponds to an approximate flow rate through the valve body. The control signal may suitably be a digital control signal, however, it is conceivable to use an analogue control signal.

Although a differential pressure regulator limits the variations in differential pressure, there may still be quite some variations/tolerances, as mentioned above. Such tolerances may be up to ±20%, which is not uncommon for what is generally considered to be a good valve in this technical field. Such large tolerances are not only due to variations in differential pressure, but are also caused by inaccurate positioning of the actuator and because of variations in control valve tolerances. Therefore, in accordance with the present exemplary embodiment, the control unit, when receiving a new request input signal, it may quickly control the actuator to be moved to a position which will approximately result in the desired flow rate. By subsequently taking the flow input signal into account as well, the control unit may then fine tune the position of the actuator. By this two-step procedure a relatively quick arrival at the desired flow rate may be obtained, despite any tolerances. This is reflected in the following exemplary embodiment.

Thus, according to at least one exemplary embodiment, the control unit is configured to:
- based on the received request input signal, initially control the actuator to move to a position which approximately corresponds to said desired flow rate, and subsequently,
- based on the received flow input signal, representative of the measured flow rate of the fluid after said initial control of the actuator, fine-adjust the position of the actuator to so as to attain a flow rate which is closer to the desired flow rate.

This allows for quickly reaching a flow rate value which is close to the desired flow rate, and then the fine adjustment can be followed. This is a quicker procedure than if the control unit would, from the start of a new request flow input signal, compare the measured flow rate with the desired flow rate, and making corrections and comparisons while slowly approach the desired flow rate.

According to at least one exemplary embodiment, the control unit is configured to operate in a self-learning model by:
- using stored historical data representative of control events in which fine-adjusting was performed subsequently to the actuator having been moved to a respective position which approximately corresponded to a respective desired flow rate, and
- upon receipt of a change of desired flow rate via said request input signal, modifying the control signal based on said stored historical data to reduce the time needed for subsequent fine-adjusting to attain the desired flow rate.

By taking into account the accuracy in the relation between control signal and the flow rate, the content of the control signal may be changed for future changes of request input signal. The control unit may thus improve the accuracy in the correlation between the control signal and the resulting flow rate, such that the initial resulting flow rate in the future is even closer to the desired flow rate than historically, thereby reducing the time for the subsequent fine adjustments.

The above two-step controlling by providing a control signal to get a flow rate which is at least close to the desired flow rate and then fine adjust by taking into account the measured flow rate, and updating the control unit based on a self-learning model is beneficial as the control unit will improve its ability to predict the actuator position and/or flow rate for different control signal values. For a motorized actuator, such prediction of position may, for instance, reduce the number of movements that the actuator needs to perform, thereby increasing actuator lifetime.

Although the above discussed proportional actuator is convenient to use as it may provide a correlation between a control signal value and an approximate resulting flow rate, another type of actuator that may advantageously be used is an actuator providing positional feedback to the control unit. Thus, according to at least one exemplary embodiment, the control unit is configured to receive a positional feedback from the actuator indicating the current position of the actuator, wherein the control signal from the control unit is based on said positional feedback, so as to move the actuator towards a desired position of the actuator, which in turn corresponds to a desired position of the valve plug, which in turn corresponds approximately to a desired flow rate through the valve body. This may be a suitable alternative to the above mentioned proportional actuator. Rather than having a correlation between control signal and actuator position (such as a certain voltage, e.g. between 0 and 10 V translating in a certain actuator position), in the present exemplary embodiment, the control unit may just be configured to move the actuator in the closing or opening direction of the valve plug, and stop the actuator movement when the positional feedback from the actuator informs the control unit that the actuator has arrived at the desired position. The positional feedback from the actuator may, for instance, be provided by an integrated position sensor, such as an optical sensor, a magnetic sensor, mechanical sensor, etc.

Irrespective of the type of actuator, such as the above mentioned thermoelectric, proportional, sensor-integrated, etc., the control unit may suitably be configured to detect signs of malfunctioning. This is at least partly reflected in at least one exemplary embodiment, according to which the control unit is configured to:
- subsequently to sending the control signal to the actuator for moving the actuator into a new position, continue to receive flow input signal from the flow meter, and
- upon detection that the flow rate measured by the flow meter deviates more than a predefined allowable deviation, determine that a malfunction has occurred in the valve arrangement or pipe network connected to the valve arrangement. Such a predefined allowable deviation may suitably be selected to be sufficiently large so that tolerances and normal error margins are not mistaken for malfunction.

According to at least one exemplary embodiment, the control unit is configured to:
- upon detection that a malfunction has occurred, perform a self-diagnostic program sequence to identify which part of the valve arrangement that is malfunctioning or to determine that the malfunctioning is in the pipe network to which the valve arrangement is connected.
The self-diagnostic program sequence may include controlling the actuator to move the valve plug between its closed position into its fully opened position, and to take into account the how/if the flow input signal changes. For instance, if the flow meter indicates that a flow is present even though the control unit has, by means of its control signal, instructed the actuator to move the valve plug to its closed position, then that may be indicative of a malfunctioning of the actuator or the valve plug. If, on the other hand, when the valve plug is moved from its closed position to its fully opened position, does not result in the expected change in measured flow rate, that may be indicative of a malfunctioning flow meter.

According to at least one exemplary embodiment, the valve arrangement further comprises one or more temperature sensors configured to measure the temperature in the fluid, wherein the control unit is configured to receive, from said one or more temperature sensors, temperature information indicating the temperature of the fluid, wherein the control unit is configured to, based on the received temperature information, and based on the received flow input signal from the flow meter, detect a malfunctioning of the flow meter.

This is advantageous because if the flow meter is not detecting any flow rate even if the actuator has moved the valve plug into an open state, then the temperature sensor should be able to tell if there is a flow or not. If the temperature is changing when the valve opens then the control unit may interpret it as a flow in through valve. Thus, the control unit may then determine that the flow meter is malfunctioning. However, if the temperature is not changing than it is more likely that there is no flow, in which case a possible malfunction stems from elsewhere in the pipe network. The control unit may suitably also communicate with external devices, such as an external circulation pump and/or a central controller of a building management system (BMS). For instance, if the circulation pump is turned off, but the flow meter continues giving a positive flow input signal indicating a non-zero flow rate, then the flow meter is likely malfunctioning. Although a single temperature sensor may suffice, using two or more temperature sensors for delta temperature measurements may enable even more accurate diagnosis. By placing one temperature sensor upstream of a consumption point (for example a radiator) and another temperature sensor downstream thereof, a delta temperature measurement may be performed. At high flow rates the temperature difference (ΔT) across the consumption point will not be as high as at flow rates (at low flow rates, the fluid has more time for heat exchange at the consumption point). For instance, by sending a control signal from the control unit to the actuator in order to change the valve plug position so as to change the flow rate, a change in ΔT is to be expected. If there is no such change, this may be indicative of, for example, valve plug or actuator malfunctioning, or malfunctioning communication between the control unit and the actuator.

According to at least one exemplary embodiment, when said request input signal is representative of a desired flow rate which is equal to or below a predefined flow rate, then the control unit is configured to ignore any flow input signal received from the flow meter, and to base the sending of the control signal on the request input signal.

At very low flow rates, the accuracy of most commercially used flow meters is rather low. Indeed, at very low flow rates, some of the flow meters may even be configured to stop measuring. To give an example, in one type of flow meter a ball is caused to circulate in a chamber by the flow passing through the chamber, and the speed of the ball can be translated into a flow rate. However, at very low flow rates, the ball kinetic energy of the fluid will not be sufficient to put the ball in motion. These kind of inaccuracies in flow meters at low flow rates could result in problems in a control algorithm used by the control unit. Therefore, it may be a technical benefit that the control unit ignores any flow input signal when the control unit has determined that the request input signal indicates a desired value of the flow rate which is lower than a predefined flow rate. That predefined flow rate may thus suitably be set based on, for example, the specifications of the flow meter used in the valve arrangement or based on empirical tests thereof.

According to at least one exemplary embodiment, the control unit is configured to periodically control the actuator to move the valve plug to an open position for which it is expected that the resulting flow rate through the valve body is of a magnitude which is measureable by the flow meter. This may be advantageous as the control unit may in this way automatically confirm that the valve arrangement is considered to work properly or that a malfunction is likely to have occurred. In case the control unit does not receive a flow input signal indicative of an expected flow rate value, it may suitably be configured to send an alert signal to a building management system or to some other operatively connected device such as a remote server, a mobile phone, etc. Such an alert signal may suitably be sent in any other events of malfunction discussed in this disclosure.

In some exemplary embodiments, the control unit may be provided as a separate device which may be arranged in wireless or wired communication with the flow meter and the actuator. However, in some exemplary embodiments, the control unit may be provided as an integrated part of an assembly. For instance, the valve arrangement may comprise an actuator assembly which comprises both the actuator and the control unit. Such an actuator assembly may thus be produced and delivered to customers as one device, which includes both the actuator and the integrated control unit. Similarly, in some exemplary embodiments the valve arrangement may comprise a flow meter assembly which comprises both the flow meter and the control unit. Such a flow meter assembly may thus be produced and delivered to customers as one device, which includes both the flow meter and the integrated control unit.

The herein described control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where it includes a programmable device such as the microprocessor, microcontroller or programmable digital signal processor mentioned above, the processor may further include computer executable code that controls operation of the programmable device.

Generally, all terms used in the claims are to be interpreted according to their ordinary meaning in the technical field, unless explicitly defined otherwise herein. All references to "a/an/the part, portion, element, component, arrangement, device, etc." are to be interpreted openly as referring to at least one instance of the part, portion, element, apparatus, component, arrangement, device, etc., unless explicitly stated otherwise. Further features of, and advantages with, the present inventive concept will become apparent when studying the appended claims and the following description. The skilled person realizes that different features of the present inventive concept may be combined to create embodiments other than those described in the following, without departing from the scope of the present inventive concept.

### BRIEF DESCRIPTION OF THE DRAWINGS

Fig. 1 is a very schematic illustration of a valve arrangement according to at least one exemplary embodiment of the present disclosure.
Fig. 2 is a very schematic illustration of a valve arrangement according to at least a further exemplary embodiment of the present disclosure.
Fig. 3 is an illustration of a valve arrangement according to at least another exemplary embodiment of the present disclosure.

### DETAILED DESCRIPTION

The present inventive concept will now be described more fully hereinafter with reference to the accompanying drawings, in which certain aspects of the present inventive concept are shown. The present inventive concept may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present inventive concept is not limited to the embodiments described herein and illustrated in the drawings; rather, the skilled person will recognize that many changes and modifications may be made within the scope of the appended claims. Like reference numerals refer to like elements throughout the description.

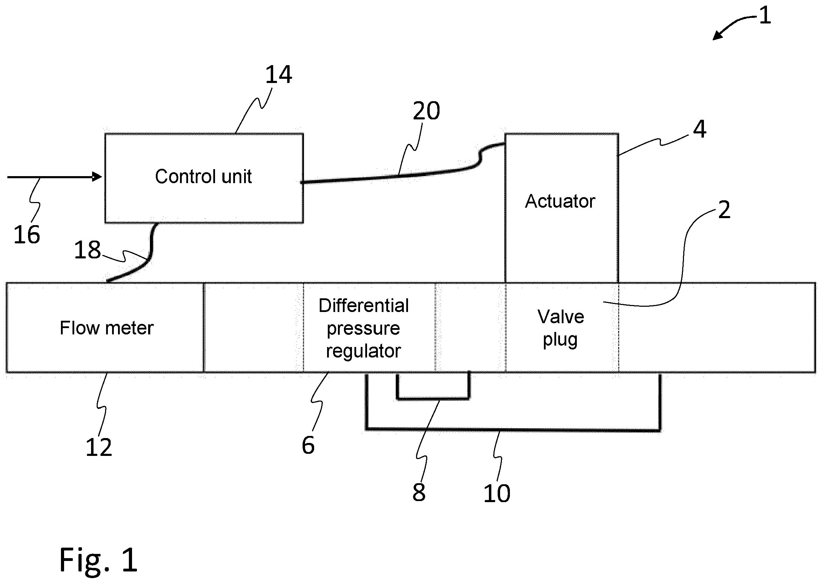

Fig. 1 is a very schematic illustration of a valve arrangement 1 according to at least one exemplary embodiment of the present disclosure. The illustrated valve arrangement 1 comprises a valve plug 2 located within a valve body (the valve body is not specifically indicated in the schematic illustration of Fig. 1). The valve plug 2 can be arranged in different positions. One end position is a closed position in which fluid is prevented (or only a leak flow is allowed) to a flow from an inlet of the valve body to an outlet of the valve body. Another end position is a fully opened position. The valve plug 2 is movable between the two end positions, but can also be stopped in intermediate positions between the two end positions. An actuator 4 is operatively connected or connectable to the valve plug 2 for moving the valve plug 2 to adjust the flow rate through the valve body. The valve arrangement 1 also comprises a differential pressure regulator 6 configured to limit variations of the differential pressure across the valve plug 2 when fluid is flowing through the valve body. In this illustration, it is shown that the differential pressure regulator 6 may be arranged as an individual component outside the valve body, for example in its own housing. However, in other examples the differential pressure regulator 6 may be integrated within the valve body. In either case, as schematically illustrated in Fig. 1, by a first and a second fluid passage 8, 10, the differential pressure regulator is in fluid communication with the fluid flow upstream and downstream of the valve plug 2, respectively. The general direction of the fluid flow in Fig. 1 is from left to right. The differential pressure regulator 6, being in fluid communication both upstream and downstream of the valve plug 2, can compensate for pressure changes. The differential pressure regulator 6 strives to maintain a stable pressure difference across the valve plug 2. As explained previously, although the differential pressure regulator 6 is advantageous, and improves the control of the valve plug 2 and thus the control of the flow rate, there may still be some variations in differential pressure, e.g. up to ±20%, and a minimum differential pressure is required for standard differential pressure regulators to work properly. This may therefore increase the size of the pump head of the fluid distribution system, and thereby also increase the operating costs. Conversely, if the fluid distribution system cannot provide the desired minimum starting pressure, pressure variations at low starting pressures will cause inaccurate flow control.

Therefore, the valve arrangement 1 also comprises a flow meter 12 and a control unit 14. The flow meter 12 is configured to measure the flow rate through the valve body 2. As already mentioned, in this illustration, the general flow direction is from left to right. The fluid flow will thus first pass along the flow meter 12, then through the differential pressure regulator 6 and then after having passed along the valve plug 2, the fluid leaves the valve arrangement 1. In this exemplary embodiment, the flow meter 12 is arranged upstream of the differential pressure regulator 6 and the valve plug 2. This may be advantageous as it reduces the risk of disturbances in the flow, e.g. turbulence caused by the other components, which would affect the accuracy of the flow meter 12 if it is arranged close to the other components. Nevertheless, it is conceivable to arrange the flow meter 12 downstream of one or both of the other components, for example at a suitable distance so as to reduce the risk of flow disturbing effects. Furthermore, it is even conceivable to integrate the flow meter in the valve body, i.e. in a common housing with the valve plug, suitably arrange in such way to reduce the risk of disturbances.

The control unit 14 is configured to receive a request input signal 16 representative of a desired flow rate through the valve body. The request input signal 16 may be received from a central controller, such as a building management system, or from a local device, such as a temperature-adjusting device in a room, or from a mobile device, such as a smart phone, or from a computer, etc. Thus, it should be understood that the control unit 14 may be configured in various ways with various communication interfaces, including communication interface for wired and/or wireless communication. For example, the communication interface may be compatible with WiFi, Bluetooth, and other wireless communication standards or protocols.

The control unit 14 is configured to receive a flow input signal from the flow meter 12 representative of the measured flow rate. Although Fig. 1 illustrates a first cable 18 from the flow meter 12 to the control unit 14, thus indicating a wired communication, it should be understood that in other examples, the flow meter 12 may send the flow input signal wirelessly.

The control unit 14 is configured to, based on the received request input signal 16 and the received flow input signal, send a control signal to the actuator 4 to move the valve plug 2 or to maintain the valve plug 2 in its position. Again, although Fig. 1 illustrates a second cable 20 between the control unit 14 and the actuator 4, thus indicating a wired communication, it should be understood that in other examples, the control unit 14 may send the control signal to the actuator 4 wirelessly.

Hereby, accurate flow control through the valve plug 2 is obtainable even at low starting pressures.

The actuator 4 may, for instance be a thermoelectric actuator. A thermoelectric actuator is stepless, thereby allowing for high accuracy to be obtained. Other advantages and functionalities may include those already discussed in this disclosure. As the thermoelectric actuator expands and contracts its temperature-sensing material, it may suitably be connected to a linearly movable valve plug. Thus, according to at least one exemplary embodiment (irrespective of the actuator 4 being a thermoelectric actuator or not), the valve plug 2 is a linearly movable valve plug.

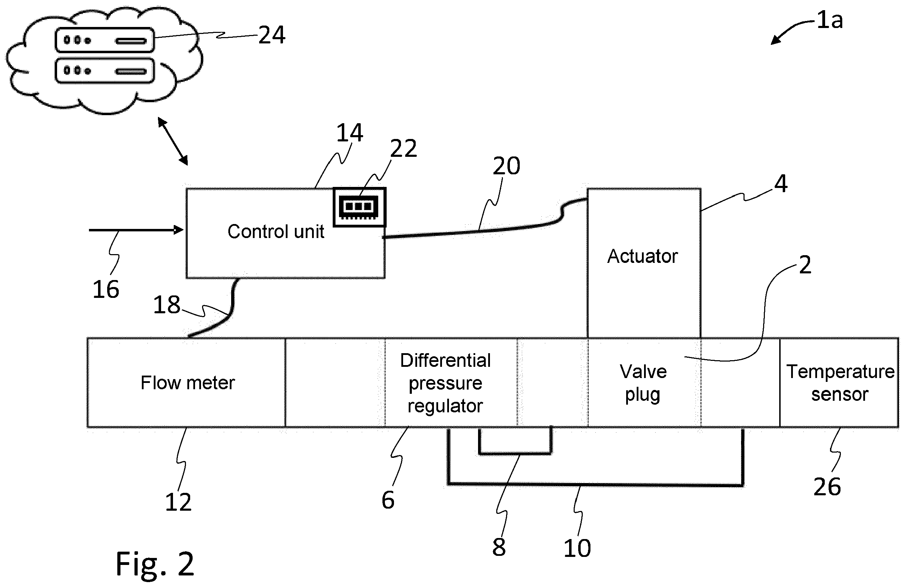

Fig. 2 is a very schematic illustration of a valve arrangement 1a according to at least a further exemplary embodiment of the present disclosure. The valve arrangement 1a in Fig. 2 includes all the parts illustrated for the valve arrangement 1 in Fig. 1, and those parts have therefore been assigned the same reference numerals.

As illustrated in Fig. 2 the control unit 14 may comprise or have access to an electronic memory 22. The control unit 14 may be configured to determine, based on data stored in the electronic memory 24, a relation between a control signal change and its impact on the flow rate through the valve body. The control unit 14 may be configured to control the actuator 4 based on said relation. Such an electronic memory 22 may be a local electronic memory within the control unit. However, as illustrated in Fig. 2, such an electronic memory could instead be provided remotely, such as in a remote server 24.

In at least some exemplary embodiments, the control unit 14 is configured to operate in a self-learning model by:
- subsequently to sending the control signal to the actuator 4, continuing to receive said flow input signal from the flow meter 12,
- determining the accuracy of said determined relation between the control signal change and the impact on the flow rate, and
- updating, based on said determined accuracy, said data in the electronic memory 22.
This may, for example, be relevant when the control unit 14 receives a new request input signal 16 (e.g. due to a request for change of room temperature). The control unit 14 will send a different control signal to the actuator 4 (or different content of the control signal), requesting the actuator 4 to move the valve plug 2 to a new position. In particular, the control unit 14 may control the actuator 4 to perform a quick change to arrive at an approximate flow rate. By obtaining feedback from the flow meter 12, and updating the electronic memory 22 for future reference, the control unit 14 may improve its control in the future to faster achieve the desired flow rate. Thus, the control unit 14 may improve its accuracy already at the initial movement of the valve plug 2, and thus reducing the time needed for any subsequent fine-adjustment.

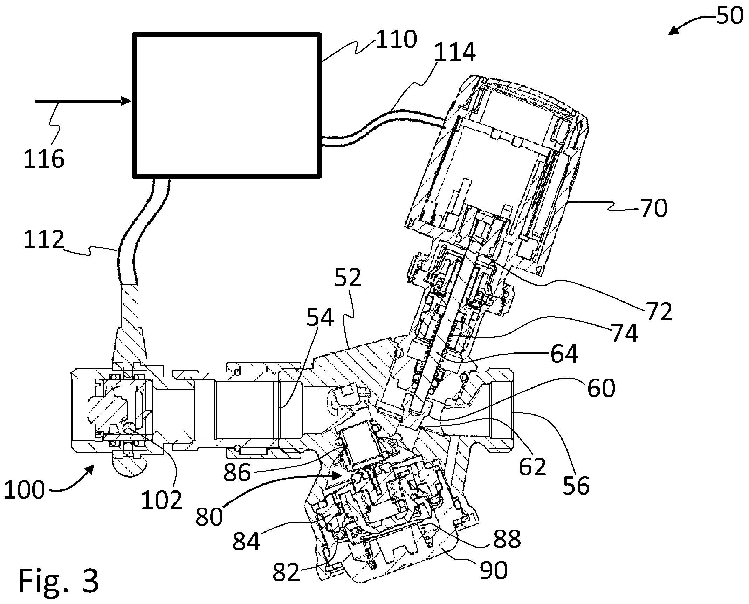

Fig. 3 is a schematic illustration of a valve arrangement 50 according to at least another exemplary embodiment of the present disclosure. Most of the components in Fig. 3 are illustrated in cross-section. The valve arrangement 50 may be arranged in a pipe network. The pipe network may be part of a fluid distribution system such as in a building having a plurality of consumption points.

The valve arrangement 50 comprises a valve body 52 having an inlet 54 for receiving a fluid into the valve body 52, and an outlet 56 for discharging fluid from the valve body 52. Thus, a flow path extends through the valve body 52, from the inlet 54 to the outlet 56. The outlet 56 is located downstream of the inlet 54, wherein the flow path is configured to guide a fluid from the inlet 54 to the outlet 56. At the inlet 54 and the outlet 56, the valve body 52 may be provided with internal threads to which external threads of other components of the valve arrangement 50, or pipe sections of the pipe network, may be threaded. Alternatively, the valve body 52 may be provided with external threads, to which internal thread of components/pipe sections may be threaded.

A valve plug 60 is located within the valve body 52. The valve plug 60 is movable between a closed position in which fluid is prevented (or only a leak flow is allowed) to flow from the inlet 54 to the outlet 56, and a fully open position. The valve plug 60 may be moved to intermediate positions between said closed position and said fully open position, thereby allowing different flow rates to be passed through the valve body 52. In the closed position, the valve plug 60 seals against a valve seat 62 within the valve body 52. In different intermediate positions and in the fully opened position of the valve plug 60, the valve plug 60 is separated from the valve seat 62, and the available cross-sectional area for fluid flow between the valve plug 60 and the valve seat 62 increases as the valve plug 60 is moved from the closed position towards the fully opened position. The valve plug 60 may be connected to a valve stem 64 as illustrated in Fig. 3.

An actuator 70 is operatively connected or connectable to the valve plug 60 for moving the valve plug 60 to adjust the flow rate through the valve body 52. For instance, as illustrated in Fig. 3, the actuator 70 may comprise an engagement part 72 which may push valve stem 64 and thus the valve plug 60 towards the valve seat 62. A spring 74 located around the valve stem 74 may be biased to push the valve stem 64 and thereby the valve plug 60 in the opposite direction, i.e. in an opening direction. Thus, if no force is provided from the actuator 70 to the valve stem 64, then the valve plug 60 will reach its fully opened position. This is generally referred to as a "normally open" type valve. It should, however, be understood that the general inventive concept may be applied also for "normally closed" type valves, i.e. in which valve plugs are in their closed position when no force from the actuator is applied (for example a pulling force).

From the above, it should be understood that the actuator 70 may suitably be configured to be able to move the valve plug 60 between the two end positions of the valve plug 60, i.e. the closed position and the fully open position, and to intermediate positions between the two end positions.

A differential pressure regulator 80 is configured to limit variations of the differential pressure across the valve plug 60 when fluid is flowing through the valve body 52. The differential pressure regulator 80 is in fluid communication with the fluid flow both upstream and downstream of the valve plug 60. Unlike the examples in Fig. 1 and 2, in the present example in Fig. 3, the differential pressure regulator 80 is provided within the valve body 52. The differential pressure regulator 80 and the valve plug 60 may thus be provided in a common housing. However, it should be understood that in other exemplary embodiments, the illustrated valve plug 60 and actuator 70 could be combined with an external differential pressure regulator, which is provided as a separate component outside of the valve body 52 (but still being in fluid communication with the fluid flow both upstream and downstream of the valve plug 60).

The illustrated differential pressure regulator 80 is just one example, and other types of differential pressure regulators are also conceivable. The illustrated differential pressure regulator 80 comprises a membrane 82. The membrane 82 is fixed to a membrane support 84 which is connected to, and movable with a closing member 86. A first side of the membrane 82 is in fluid communication with the fluid flow upstream of the valve plug 60, whereby the fluid applies a first pressure to the membrane 82, resulting in a first force which is the product of the first pressure and the area of the first side subjected to the first pressure. Similarly, an opposite second side of the membrane 82 is in fluid communication with the fluid flow downstream of the valve plug 60, whereby the fluid applies a second pressure to the membrane 82, resulting in a second force which is the product of the second pressure and the area of the second side subjected to the second pressure. Thus, a difference between the first and the second forces controls the movement of the membrane 82 and the membrane support 84 together with the closing member 86.

As illustrated, a spring element 88 is arranged between a lid 90 arranged in the valve body 52 and the membrane support 84 for exerting a third force on at least a part of the membrane support 84. Thus, the direction of the third force is at least partly the same as the direction of the second force, i.e. acting to open the closing member 86. The closing member 86 will function as a differential pressure valve part, moving up or down to compensate for any differential pressure changes that might occur. The compensation results in a substantially unchanged differential pressure over the valve plug 60, which functions as the control valve part. In other words, the differential pressure valve part may limit the differential pressure to which the control valve part is exposed. Therefore, the operating conditions for the control valve part may be maintained at an adequate level despite variations of the pressure level in the pipe network.

The valve arrangement 50 further comprises a flow meter 100 configured to measure the flow rate through the valve body. The flow meter 100 is here illustrated as being of a type in which a ball 102 is caused to circulate due to the kinetic energy of the fluid flow, and during the circulation it will temporarily block a light beam, wherein the frequency with which the light beam is blocked is a measure of the speed of the ball 102, and thus a measure of the flow rate. However, this is just one example of a conceivable flow meter, and it should be understood that other types of flow meters are also conceivable, such as for instance ultrasonic flow meters.

The valve arrangement 50 further comprises a control unit 110, here schematically illustrated as being in operative connection with both the actuator 70 and the flow meter 100. The control unit 110 in Fig. 3 may have corresponding functionalities and may be configured to perform corresponding actions as the control unit 14 in Fig. 1 and Fig. 2.

In Fig. 3, a first signal cable 112 connects the control unit 110 with the flow meter 100. A second signal cable 114 connects the control unit 110 with the actuator 70. Thus, the control unit 110 is here illustrated as being in wired communication with both the flow meter 100 and the actuator 70, however, it should be understood that the control unit 110 may in other exemplary embodiments be arranged in wireless communication with one or both of the flow meter 100 and the actuator 70. In other exemplary embodiments, the control unit may be integrated with the actuator in a common actuator assembly, provided as one integral part. In other exemplary embodiments, the control unit may be integrated with the flow meter in a common flow meter assembly. Furthermore, as discussed in connection with Fig. 1 and Fig. 2, the control unit 110 in Fig. 3 may comprise or have access to an electronic memory, which may thus be a local or remote electronic memory.

Similarly, to the discussion in relation to Fig. 1 and Fig. 2, the control unit 110 in Fig. 3 is configured to receive a request input signal 116 representative of a desired flow rate through the valve body 52. Such a request input signal 116 may be a wireless or wire-bound request input signal 116. The control unit 110 is also configured to receive, from the flow meter 100, a flow input signal representative of the measured flow rate (here via the first signal cable 112). The control unit 110 is configured to, based on the received request input signal 116 and the received flow input signal, send a control signal (here via the second signal cable 114) to the actuator 70 to move the valve plug 60 or to maintain the valve plug 60 in its position.

It should be understood that any signal discussed in the present disclosure may be a digital signal or an analogue signal. In either case the signal may carry data from one device to another device. For instance, the signal may be a logic signal that describes a bit stream; the signal may be a considered to be a sequence of codes represented by a physical quantity; the signal may refer to a time-varying voltage, current or electromagnetic wave that carries information, etc.

The actuator 70 in Fig. 3 may suitably be a proportional actuator. The control signal (suitably a digital control signal) from the control unit 110 may therefore set a position of the actuator 70 which in turn corresponds to a position of the valve plug 60, which in turn corresponds to an approximate flow rate through the valve body 52. In some exemplary embodiments, the actuator 70 may be provided with one or more position detecting components, such as optical sensors, magnet sensors, or mechanical sensors/switches etc. to determine the position of the actuator 70. In the example in Fig. 3, such sensors or switches could for instance determine the position of the engagement part 72 of the actuator 70, as the valve plug 60 will, via the valve stem 62 follow the movement of the engagement part 72. The control unit 110 may therefore be configured to receive a positional feedback from the actuator 70 indicating the current position of the actuator 70. The control signal from the control unit 110 may be based on such positional feedback, so as to move the actuator 70 (and in this case the engagement part 72 of the actuator 70) towards a desired position, which in turn corresponds to a desired position of the valve plug 60, which in turn corresponds approximately to a desired flow rate through the valve body 52. Thus, the control unit 110 may not necessarily need to have access to an electronic memory but may quickly find an approximate position based on such positional feedback from the actuator 70, and may then fine-adjust based on the flow input signal from the flow meter 100. As already explained, due to various tolerances, even for what is considered to be a good valve and good differential pressure regulator, it is not uncomment to have a tolerance of ± 20% with respect to the desired flow rate. By using the positional feedback, a quick initial movement may be achieved to get approximately the desired flow rate, and then the fine-adjustment can be made. By quickly arriving at an approximately correct position, larger oscillations moving the valve up and down to arrive at the correct position may be avoided, which may otherwise be the case if the control unit 110 is attempting to quickly arrive at the correct position relying only on the flow input signal (larger movements generally become less accurate compared to smaller movements, in absolute terms).

From the above it can be understood that, in a general sense, according to at least some exemplary embodiments (not limited to those shown in the drawings), upon receipt of a request input signal, or a change in request input signal, the control unit is configured to control the movement of the valve plug in two steps:
- first, the control unit controls the actuator based on the request input signal, but without taking into account any flow input signal from the flow meter, so as to move the valve plug to an approximate position which approximately corresponds to the desired flow rate, and
- then, based on flow input signal from the flow meter, the control unit controls the actuator to fine-adjust the position of the valve plug to reach a position which more accurately results in the desired flow rate.

With reference to for example Fig. 3 (but also applicable to other examples, such as those in Fig. 1 and Fig. 2), according to at least one exemplary embodiment, the control unit 110 is configured to:
- based on the received request input signal 116, initially control the actuator 70 to move to a position which approximately corresponds to said desired flow rate, and subsequently,
- based on the received flow input signal, representative of the measured flow rate of the fluid after said initial control of the actuator 70, fine-adjust the position of the actuator 70 (in this case the engagement part 72 of the actuator 70) so as to attain a flow rate which is closer to the desired flow rate.

The control unit 110 may suitably be configured to operate in a self-learning model. The control unit 110 may use stored historical date representative of control events in which fine-adjustment was performed subsequently to the actuator 70 having been moved to a respective position which approximately corresponded to a respective desired flow rate. Such historical data may, for instance, be stored in a local or remote electronic memory, such as the previously discussed electronic memory. Upon receipt of a change of desired flow rate via the request input signal 116, the control unit 110 may modify the control signal based on the stored historical data to reduce the time needed for subsequent fine-adjustment to attain the desired flow rate. Thus, the control unit 110 may each time a new request input signal is received, calling for a movement of the valve plug 60, suitably store parameters of the control action, such as the initial movement, and the fine-adjustment needed, for future reference. Historical events that required small fine-adjustment may be used for positive reinforcement in the self-learning model, while events that required larger fine-adjustments may be used for negative reinforcement in the self-learning model. In this way, the control unit 110 may learn to improve control actions for different request input signals 116 and/or for different changes in request input signals 116.

The valve arrangement 50, and in particular the control unit 110, may suitably be used also for detecting malfunctions. For instance, subsequently to sending the control signal to the actuator 70 to move into a new position, the control unit 110 may be configured to continue to receive flow input signal from the flow meter 100. Upon detection that the flow rate measured by the flow meter 100 deviates more than a predefined allowable deviation, the control unit 110 may determine that a malfunction has occurred in the valve arrangement 50 or in the pipe network connected to the valve arrangement 50. For instance, the predefined allowable deviation may be set to be outside an expected tolerance. Just to give an illustrative example, if an expected tolerance is ±20%, then a predefined allowable deviation may for example be set to ±30%. Suitably, the control unit 110 may be in substantially continuous communication with the flow meter 100.

Upon detection that a malfunction has occurred, the control unit 110 may perform a self-diagnostic program sequence to identify which part of the valve arrangement that is malfunctioning or to determine that the malfunctioning is in the pipe network to which the valve arrangement 50 is connected.

It should be understood that the various operations and control actions performed by the control unit 110 in Fig. 3, may also be performed by the control unit 14 in Fig. 1 and Fig. 2. With reference to Fig. 2, there is illustrated that the valve arrangement 1a may also comprise one or more temperature sensors 26. Such temperature sensor or sensors may also be implemented in the valve arrangement 50 of Fig. 3 and in other exemplary embodiments. The temperature sensor(s) 26 are configured to measure the temperature in the fluid. As illustrated the temperature sensor(s) 26 may suitably be located downstream of the valve plug 2, however the specific position is not critical for the temperature measurement as the temperature of the fluid does not vary much when flowing through the valve arrangement 1a.

The control unit 14 is configured to receive, from the temperature sensor(s) 26, temperature information indicating the temperature of the fluid. The control unit 14 is configured to, based on the received temperature information, and based on the receive flow input signal from the flow meter 12, detect a malfunctioning of the flow meter 12. For instance, if the flow meter 12 is not detecting any flow rate even though the actuator 4 has moved the valve plug into an open position, then the information from the temperature sensors(s) may still be able to reveal if there is a flow or not. If the temperature is changing when the valve opens, then there is likely a flow through the valve body.

The control unit 14 in Fig. 1 and Fig. 2, as well as the control unit 110 in Fig. 3, may be configured to ignore any flow input signal from the flow meter at very small openings of the valve plug 2, 60, respectively. As explained previously, at very low flow rates, the accuracy of many commercially available flow meters is inadequate, and may result in incorrect control actions from the control unit. Therefore, when the request input signal (16, 116) is representative of a desired flow rate which is equal to or below a predefined flow rate, then the control unit (14, 110) may be configured to ignore any flow input signal received from the flow meter (12, 100), and to base the sending of the control signal on the request input signal (16, 116).

Furthermore, the control unit (14, 110) may be configured to periodically control the actuator (4, 70) to move the valve plug (2, 60) to an open position for which it is expected that the resulting flow rate through the valve body (52) is of a magnitude which is measurable by the flow meter (12, 100). This procedure enables the control unit to detect improper functioning of the valve arrangement.

## Claims

1. A valve arrangement for controlling fluid flow, comprising:
- a valve body having an inlet for receiving a fluid into the valve body, and outlet for discharging fluid from the valve body,
- a valve plug located within the valve body and movable between a closed position in which fluid is prevented, or only a leak flow is allowed, to flow from said inlet to said outlet, and a fully opened position,
- an actuator operatively connected or connectable to the valve plug for moving the valve plug to adjust the flow rate through the valve body,
- a differential pressure regulator configured to limit variations of the differential pressure across the valve plug when fluid is flowing through the valve body, the differential pressure regulator being in fluid communication with the fluid flow both upstream and downstream of the valve plug,
- a flow meter configured to measure the flow rate through the valve body,
- a control unit configured to receive:
i) a request input signal representative of a desired flow rate through the valve body, and
ii) ii) a flow input signal from the flow meter representative of the measured flow rate,
wherein the control unit is configured to, based on the received request input signal and the received flow input signal, send a control signal to the actuator to move the valve plug or to maintain the valve plug in its position.

2. The valve arrangement as claimed in claim 1, wherein the actuator is a thermoelectric actuator.

3. The valve arrangement as claimed in any one of claims 1-2, wherein the control unit comprises or has access to an electronic memory, wherein the control unit is configured to determine, based on data stored in the electronic memory, a relation between a control signal change and its impact on the flow rate through the valve body, wherein the control unit is configured to control the actuator based on said relation.

4. The valve arrangement as claimed in claim 3, wherein the control unit is configured to operate in a self-learning model by:
- subsequently to sending the control signal to the actuator, continuing to receive said flow input signal from the flow meter,
- determining the accuracy of said determined relation between the control signal change and the impact on the flow rate, and
- updating, based on said determined accuracy, said data in the electronic memory.

5. The valve arrangement as claimed in any one of claims 1-4, wherein the actuator is a proportional actuator, wherein the control signal from the control unit sets a position of the actuator, which in turn corresponds to a position of the valve plug, which in turn corresponds to an approximate flow rate through the valve body.

6. The valve arrangement as claimed in any one of claims 1-4, wherein the control unit is configured to receive a positional feedback from the actuator indicating the current position of the actuator, wherein the control signal from the control unit is based on said positional feedback, so as to move the actuator towards a desired position of the actuator, which in turn corresponds to a desired position of the valve plug, which in turn corresponds approximately to a desired flow rate through the valve body.

7. The valve arrangement as claimed in claim 5 or 6, wherein the control unit is configured to:
- based on the received request input signal, initially control the actuator to move to a position which approximately corresponds to said desired flow rate, and subsequently,
- based on the received flow input signal, representative of the measured flow rate of the fluid after said initial control of the actuator, fine-adjust the position of the actuator to so as to attain a flow rate which is closer to the desired flow rate.

8. The valve arrangement as claimed in claim 7, wherein the control unit is configured to operate in a self-learning model by:
- using stored historical data representative of control events in which fine-adjusting was performed subsequently to the actuator having been moved to a respective position which approximately corresponded to a respective desired flow rate, and
- upon receipt of a change of desired flow rate via said request input signal, modifying the control signal based on said stored historical data to reduce the time needed for subsequent fine-adjusting to attain the desired flow rate.

9. The valve arrangement as claimed in any one of claims 1-8, wherein the control unit is configured to:
- subsequently to sending the control signal to the actuator for moving the actuator into a new position, continue to receive flow input signal from the flow meter, and
- upon detection that the flow rate measured by the flow meter deviates more than a predefined allowable deviation, determine that a malfunction has occurred in the valve arrangement or pipe network connected to the valve arrangement.

10. The valve arrangement as claimed in claim 9, wherein the control unit is configured to:
- upon detection that a malfunction has occurred, perform a self-diagnostic program sequence to identify which part of the valve arrangement that is malfunctioning or to determine that the malfunctioning is in the pipe network to which the valve arrangement is connected.

11. The valve arrangement as claimed in claim 9 or 10, further comprising one or more temperature sensors configured to measure the temperature in the fluid, wherein the control unit is configured to receive, from the temperature sensor(s), temperature information indicating the temperature of the fluid, wherein the control unit is configured to, based on the received temperature information, and based on the received flow input signal from the flow meter, detect a malfunctioning of the flow meter.

12. The valve arrangement as claimed in any one of claims 1-11, wherein when said request input signal is representative of a desired flow rate which is equal to or below a predefined flow rate, then the control unit is configured to ignore any flow input signal received from the flow meter, and to base the sending of the control signal on the request input signal.

13. The valve arrangement as clamed in claim 12, wherein the control unit is configured to periodically control the actuator to move the valve plug to an open position for which it is expected that the resulting flow rate through the valve body is of a magnitude which is measureable by the flow meter.
